# EUROPEAN PATENT SPECIFICATION

(11) **EP 2 529 956 B1**
(45) Date of publication and mention of the grant of the patent: **21.06.2017**
(21) Application number: 11736774.8
(22) Date of filing: 25.01.2011
(51) Int. Cl.: B60C 19/08, B60C 11/00

(54) **PNEUMATIC TIRE FOR MOTORCYCLE**
LUFTREIFEN FÜR EIN MOTORRAD
ENVELOPPE PNEUMATIQUE POUR MOTOCYCLE

(30) Priority: 26.01.2010 JP 2010014385
(43) Date of publication of application: 05.12.2012
(73) Proprietor: Bridgestone Corporation, Tokyo 104-8340 (JP)
(72) Inventor: AOKI, Shinji, Kodaira-shi Tokyo 187-8531 (JP); SATO, Shusaku, Kodaira-shi Tokyo 187-8531 (JP)
(74) Representative: Oxley, Robin John George
(86) International application number: PCT/JP2011/000379
(87) International publication number: WO 2011/093057

(56) References cited:
- EP-A1- 2 106 931
- JP-A- 2000 085 316
- JP-A- 2004 268 863
- JP-A- 2004 268 863
- JP-A- 2009 051 350
- US-B1- 6 415 833

## Description

### TECHNICAL FIELD

The present invention relates to a pneumatic tire for a motorcycle, and proposes a technique capable of achieving highly excellent traveling performance regardless of whether road surfaces are dry or wet, and sufficiently discharging static electricity, both during travel and during stopping, from a tire that has been electrically charged during travel to prevent sparks from occurring, thereby enabling safety refueling or other use.

### RELATED ART

In recent years, tires for a motorcycle tend to have larger ratio of silica in a tread rubber for the purpose of improving the wet performance. As the lager ratio of silica leads to the lower electrical conductivity of the tire, additional means is necessary to discharge the static electricity occurring during the rotation of the tire under a load.

Patent Documents 1 and 2 describe that a road-contacting surface of a tread portion is sectioned into plural areas, and one or more of the areas are formed by an electrically conductive rubber. Further, in the case where the areas are entirely formed by a rubber having a low electrical conductivity, an electrically conductive rubber is disposed at a position corresponding to the tire equatorial plane.

In the former case, however, the electrically conductive rubber is not necessarily brought into contact with the road surface during the straight travel for which motorcycles are most frequently used and during stopping. In the latter case, although the electrically conductive rubber is securely brought into contact with the road surface at the time when the motorcycle travels straight, it is highly possible that the electrically conductive rubber is detached from the road surface at the time when the motorcycle is supported by a stand in a tilted and stopping position. Further, the electrically conductive rubber provided at the tire equatorial plane is more likely to wear largely or chip as compared with the other portion of the road-contacting surface, due to input of large driving force or braking force caused by tire rotation under a load at the time when the motorcycle travels straight.

### Related Art Document

### Patent Document

Patent Document 1: Japanese Patent Application Laid-open No. 2007-331657
Patent Document 2: Japanese Patent Application Laid-open No. 2008-302817

Attention is also drawn to the disclosures of US6,415,833, EP2106931, JP2000-085,316 and JP2004-268,863.

### DISCLOSURE OF THE INVENTION

### PROBLEMS TO BE SOLVED BY THE INVENTION

The present invention aims to solve the problems that the conventional techniques have, and an object of the present invention is to provide a pneumatic tire for a motorcycle capable of: reliably bringing an electrically conductive layer made of an electrically conductive rubber into contact with the road surface both during the straight travel for which motorcycles are most frequently used and at the time when motorcycles are in a tilted and stopping position; suppressing inputs into the electrically conductive layer upon rotation of tire with load during straight travel of the motorcycle; enhancing the wear resistance of the electrically conductive layer; and effectively removing the possibility of detachment.

### MEANS FOR SOLVING THE PROBLEM

According to the present invention, a pneumatic tire for a motorcycle having a layered structure with one or more layers, for example, a single-layered structure or a two-layered structure such as a cap-and-base structure or a layered structure having three or more layers, comprises: a tread portion including a tread rubber and forming a road-contacting surface; a pair of side wall portions each extending radially inward from a respective side portion of the tread portion; and bead portions extending radially inward from the respective side wall portions, in which an electrically conductive layer made of a rubber having a resistivity of 1 × 10⁶ Ω or less is provided in a central area of the road-contacting surface at a position spaced from a tire equatorial plane toward either sides in a tire width direction so as to continuously extend in a tire circumferential direction throughout the thickness of the tread rubber, and tread rubber portions other than the electrically conductive layer have a resistivity of 1 × 10⁸ Ω or more. It should be noted that the terms "a central area of the road-contacting surface in a tire width direction" as used herein means an area having 20% to 50% of the peripheral length of the tread road-contacting surface in tire meridian cross section with the tire equatorial plane being the center thereof.

Preferably, the road-contacting surface of the tread portion is sectioned into five areas consisting of a central area including the tire equatorial plane, a pair of shoulder areas each including a tread end, and a pair of intermediate areas each located between the shoulder area and the central area, and the central area, the intermediate areas and the shoulder areas are each formed by different types of rubbers.

The distance from the tire equatorial plane to the electrically conductive layer is not less than 4% and not more than 25% of the peripheral length of the road-contacting surface in the tire meridian cross section. It is also preferable that the thickness of the electrically conductive layer in the same cross section is in the range of 0.5 mm to 5.0 mm.

The entire tread rubber may be formed by a single-layered structure. Further, the tread rubber of at least one area of the road-contacting surface may be formed by a multiple-layered structure.

### EFFECT OF THE INVENTION

According to the pneumatic tire for a motorcycle of the present invention, the electrically conductive layer is offset from the tire equatorial plane that receives particularly large force at the time of driving and braking of the motorcycle, whereby it is possible to effectively eliminate the possibility of significant uneven wear and detachment of the electrically conductive layer. Further, the electrically conductive layer is disposed in the central area in the width direction of the road-contacting surface, whereby the static electricity occurring particularly in the electrically non-conductive portion having the resistivity of 1 × 10⁸ Ω or more of the tread rubber during the straight travel of the motorcycle can be effectively discharged through the electrically conductive layer that is brought into contact with the road surface regardless of the portions of occurrence of the static electricity.

With the tire having the configuration as described above, by sectioning the tread road-contacting surface into five areas consisting of the central area having the tire equatorial plane, the pair of shoulder areas having the tread end, and the pair of intermediate areas each located between the shoulder area and the central area in a manner that the central area, the shoulder areas and the intermediate areas are each formed by different types of rubber, appropriate types of rubber can be used to the respective areas to assign different functions to the respective areas.

More specifically, the traveling performance of the pneumatic tire for a motor cycle can be further improved by: disposing a rubber capable of effectively transferring the driving force and braking force to the road surface in the central area that is brought into contact with the road surface during the straight travel of the motorcycle; disposing a rubber capable of sufficiently generating a lateral force against the centrifugal force of the motorcycle in the shoulder areas that are brought into contact with the road surface at the time of cornering; and disposing a rubber suitable for sufficiently transferring the driving force and braking force to the road surface and generating the lateral force against the centrifugal force in the cornering state in the intermediate areas that are brought into contact with the road surface at the end of cornering.

Further, the electrically conductive layer can be brought into sufficiently contact with the road surface, and the static electricity can be discharged through the electrically conductive layer in a more smooth manner in both cases where the motorcycle is in the straight travel and in the tilted and stopping position, by setting the distance from the tire equatorial plane to the electrically conductive layer at the thickness center, for example, to not less than 4% and not more than 25% of the peripheral length of the road-contacting surface in the tire meridian cross section.

More specifically, in the case where the offset distance is less than 4%, the uneven wear or detachment of the electrically conductive layer may occur because input forces into the electrically conductive layer excessively increase, and the electrically conductive layer may not be brought into contact with the road surface in the tilted and stopping position. On the other hand, in the case where the offset distance exceeds 25%, it is difficult to cause the electrically conductive layer to be brought into sufficiently contact with the road surface both during the straight travel and in the tilted and stopping position.

Further, by setting the thickness of the electrically conductive layer in the meridian cross section in the range of 0.5 mm to 5.0 mm, it is possible to enhance the effect of preventing the electrification and maintain the neglect stability while effectively preventing the occurrence of the partial wear of the electrically conductively layer. More specifically, in the case where the thickness is less than 0.5 mm, it is difficult to sufficiently discharge the static electricity occurring in the tire in a smooth manner. On the other hand, in the case where the thickness exceeds 5.0 mm, there is a high possibility that the partial wear occurs in an electrically conductive layer having different property from the tread rubber portion in the central area having the predetermined properties.

### BRIEF DESCRIPTION OF THE DRAWINGS

FIG. 1 is a sectional view at a meridian illustrating a pneumatic tire for a front wheel according to an embodiment of the present invention.
FIG. 2 is a sectional view at a meridian illustrating a pneumatic tire for a rear wheel according to an embodiment of the present invention.

### BEST MODE FOR CARRYING OUT THE INVENTION

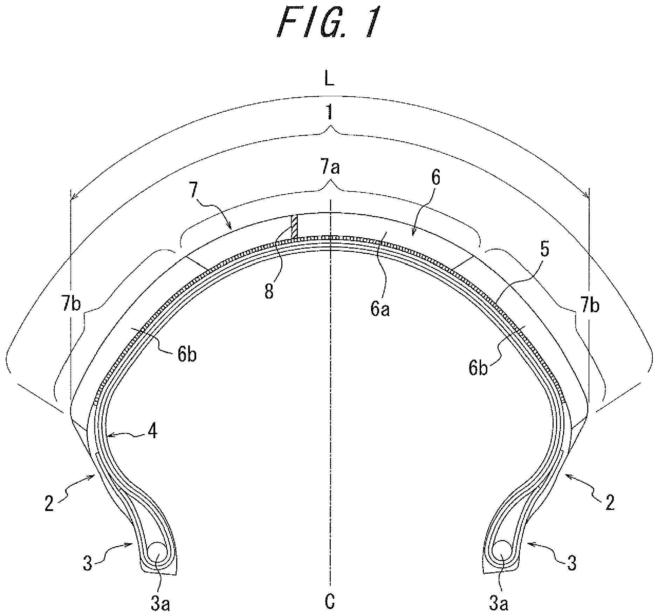

FIG. 1 illustrates a pneumatic tire for a front wheel of a motorcycle according to an embodiment of the present invention in a position where the tire is mounted on a rim and is inflated at a predetermined inner pressure. In FIG. 1, the reference numeral 1 represents a tread portion, the reference numeral 2 represents a pair of side wall portions each extending radially inward from each side portion of the tread portion 1, and the reference numeral 3 represents a pair of bead portions each extending radially inward from each of the side wall portions 2.

In this embodiment, the tread portion 1 is configured such that: a carcass 4 having two carcass plies that may have a radial structure is provided, side portions of the two carcass plies being folded radially outward around a bead core 3a embedded in the bead portion 3; a belt 5 including, for example, one or more belt layers (one layer in the drawing) formed by cords extending in the circumferential direction of a tread on the outer peripheral side of a crown area of the carcass 4; and a tread rubber 6 having a layered structure (one layer in the drawing) and forming a road-contacting surface provided on the outer peripheral side of the belt 5. In the tread portion 1 described above, although the tread rubber 6 has the layered structure with one layer in the drawing, it may have a layered structure with two or more layers.

It should be noted that, in the drawing, a curved-shaped road-contacting surface 7 formed by the tread rubber 6 includes a tire equatorial plane C. The road-contacting surface 7 is formed by three areas including a central area 7a that is brought into contact with the road surface mainly during straight travel of the motorcycle, and a pair of shoulder areas 7b that each include a tread end and are brought into contact with the road surface mainly during cornering of the motorcycle. These central area and shoulder areas are each formed by different types of tread rubber portions 6a, 6b having predetermined properties. The tread road-contacting surface 7 may be configured by one area, or five or more areas.

Further, an electrically conductive layer 8 made of a rubber having an electrical resistance of 1 × 10⁴ Ω or less is provided in the central area 7a of the road-contacting surface 7 at a position spaced from the tire equatorial plane C toward either sided in the tire width direction so as to continuously extend in the tire circumferential direction throughout the thickness of the tread rubber 6. The electrically conductive layer 8 is disposed at an angle of 10° or less relative to the tire radial direction or tire equatorial plane C so as to extend substantially in parallel to the tire radial direction. The tread rubber portions other than the electrically conductive layer 8 are made of electrically non-conductive layer having silica filling factor of 60 mass% or more.

With the tire as described above, it is possible to sufficiently bring the electrically conductive layer 8 into contact with the road surface both at the time when the motorcycle travels straight and at the time when the motorcycle is supported by a stand in a tilted and stopping position, whereby it is possible to sufficiently and smoothly discharge, through the electrically conductive layer 8, the static electricity generated in the electrically non-conductive layer of the tread portion 1 due to the tire rotation with load.

In the tire described above, it is preferable that the road-contacting surface 7 is formed by five areas consisting of the central area having the tire equatorial plane, a pair of shoulder areas each having the tread end, and a pair of intermediate areas each located between the shoulder area and the central area; and the central area, the intermediate areas, and the shoulder areas are each formed by different types of rubbers so as to cause the respective areas to play different roles and make the respective areas sufficiently achieve further excellent motion performance.

It should be noted that, although, in the drawing, the electrically conductive layer 8 is offset to the left side of the tire equatorial plane C in the drawing, the electrically conductive layer 8 may be offset to the right side in the drawing by taking the tilted and stopping position of the motorcycle into consideration.

In any of the cases described above, it is preferable that the distance from the tire equatorial plane C to the electrically conductive layer 8, for example, at the thickness center of the electrically conductive layer 8 is set in the range of 4% to 25% of the peripheral length L of the road-contacting surface in the tire meridian cross section to bring the electrically conductive layer into contact with the road surface both during travel and during stopping. Further, it is preferable that the thickness of the electrically conductive layer 8 in the same cross section is set in the range of 0.5 mm to 5.0 mm to effectively discharge the electric charge.

It is preferable to form the tread rubber 6 in the single-layered structure as illustrated in the drawing to simplify the tread rubber as well as the structure of the tire to reduce the number of manufacturing steps and the cost of product tire. Further, it is preferable that the tread rubber of at least one area of the tread rubber is configured to have a multiple-layered structure to impart a desired property to the tread rubber portion of each of the areas.

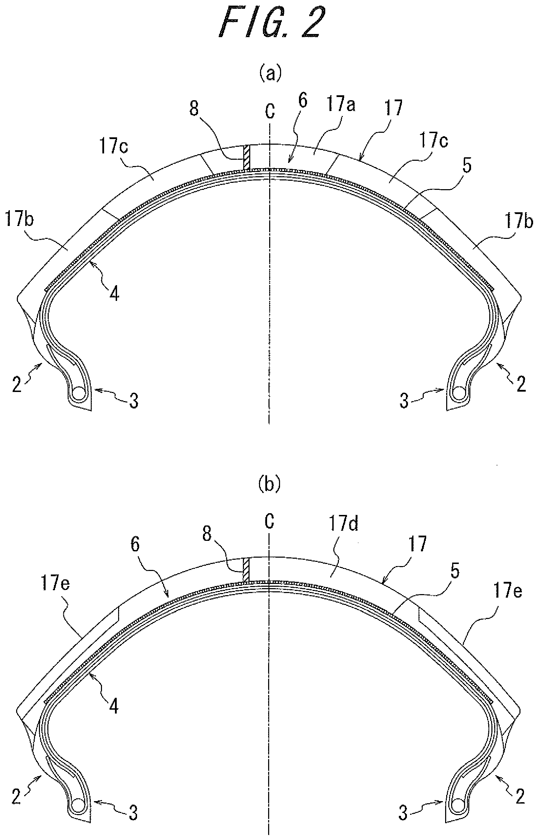

The pneumatic tire for a rear wheel illustrated in FIG. 2 is configured differently from the tire illustrated in the tire illustrated in FIG. 1 in that a road-contacting surface 17 illustrated in FIG. 2 has a curved shape changed from that of the above-described front wheel tire such that the central area of the road-contacting surface 17 is formed in a slightly sharpened shape, and the shoulder area thereof is formed in a slightly flat shape. Further, the tire illustrated in FIG. 2(a) is configured such that the road-contacting surface 17 is formed by five areas including a central area 17a having the tire equatorial plane C, a pair of shoulder areas 17b each having a tread end, and a pair of intermediate areas 17c each located between the shoulder area 17b and the central area 17a, and the central area 17a, the intermediate areas 17c and the shoulder areas 17b are each formed by different types of rubbers. Yet further, the tire illustrated in FIG. 2(b) is configured such that the road-contacting surface 17 is formed by three areas including a central area 17d extending so as to cover the intermediate area 17c illustrated in FIG. 2(a), and shoulder areas 17e each extending in a range substantially similar to the shoulder area illustrated in FIG. 2(a), and the tread rubber portion of each of the shoulder areas 17e has a cap-and-base structure in which two types of rubber layers are layered in two layers. It should be noted that, as is the case with the tire illustrated in FIG. 1, in all of the tires illustrated in FIG. 2, the electrically conductive layer 8 is offset to the left side with respect to the tire equatorial plane C in the central area 17a, 17d in the width direction of the road-contacting surface so as to continue in the tread circumferential direction throughout the thickness of the tread rubber 6, which makes it possible for the electrically conductive layer 8 to function in a similar manner to that described in connection with FIG. 1.

In the case where the rear wheel tire is configured as illustrated in FIG. 2(a), the rigidity that can withstand the driving and braking is provided in the vicinity of the central area, and the gripping force against the lateral force is provided to the side area, so that the tire can have both excellent turning performance and rigidity. In the case where the rear wheel tire is configured as illustrated in FIG. 2(b), the rigidity in the front and rear direction is provided in the vicinity of the central area, and the rigidity against the lateral force is provided in the side area, so that the tire can have both excellent stability and wet-gripping performance.

### EXAMPLE

As rear wheel tires with a size of 180/55 ZR17, a Conventional tire, Comparative Example tires, and an Example tire having the characteristics shown in Table 1 were prepared. The prepared tires were mounted on a test vehicle together with a front wheel tire with a size of 120/70 ZR17, and evaluated on a road-surface discharging property in terms of static electricity and wet performance through traveling of the test vehicle. The results thereof are shown in Table 1. It should be noted that the larger index value of the wet performance represents the excellent results.

**[Table 1]**

| | Amount of conductivity | | Resistivity of tread rubber (Ω) | | Road discharging property for static electricity | | Wet performance (index) |
|---|---|---|---|---|---|---|---|
| | Electrically conductive layer | Amount of shift from equatorial plane | Center area | Shoulder area | During travel | In a tilted and stopping position | |
| Conventional tire | Not exist | - | 10⁶ or less | 10⁶ or less | Good | Good | 100 |
| Comparative tire 1 | Not exist | - | 10⁸ or more | 10⁸ or more | No good | No good | 125 |
| Comparative tire 2 | Exist | 0% | 10⁸ or more | 10⁸ or more | Good | No good | 125 |
| Example tire | Exist | 5.60% | 10⁸ or more | 10⁸ or more | Good | Good | 125 |

As can be seen from Table 1, the Example tire has a configuration in which the offset amount of the electrically conductive layer from the tire equatorial plane is set to 5.6% at the thickness center to make the resistivity of the tread portions of the center area and the shoulder areas set to 1 × 10⁸ Ω or more, and the rubber portions thereof are made electrically non-conductive, whereby the tire can have excellent road-surface discharging property in terms of static electricity both during travel and in the tilted and stopping position, and excellent wet performance.

It can also be understood that the Conventional tire has small filling factor of silica into the tread rubber, and has the road-surface discharging property in terms of static electricity at any portion of the tread road-contacting surface, whereby the excellent static-electricity discharging property can be obtained without providing special electrical conductivity; the tread rubber of the Conventional tire, however, has undesirably small water-discharging property because of the small filling factor of silica.

### EXPLANATION OF REFERENCE CHARACTER

1 Tread portion
2 Side wall portion
3 Bead portion
3a Bead core
4 Carcass
5 Belt
6 Tread rubber
6a, 6b Tread rubber portion
7, 17 Road-contacting surface
7a, 17a, 17d Central area
7b, 17b, 17e Shoulder area
7c Intermediate area
8 Electrically conductive layer
C Tire equatorial plane
L Peripheral length of tread road-contacting surface

## Claims

1. A pneumatic motorcycle tire having a layered structure with one or more layers, comprising:
a tread portion (1) including a tread rubber (6) and forming a road-contacting surface (7,17);
a pair of side wall portions (2) each extending radially inward from a respective side portion of the tread portion; and
bead portions (3) extending radially inward from the respective side wall portions, wherein
an electrically conductive layer (8) made of a rubber having a resistivity of 1 × 10⁶ Ω or less is provided in a central area (7a,17a,17d) of the road-contacting surface at a position spaced from a tire equatorial plane (c) toward either sides in a tire width direction throughout the thickness of the tread rubber,
tread rubber portions other than the electrically conductive layer have a resistivity of 1 × 10⁸ Ω or more, and
wherein the distance from the tire equatorial plane to the electrically conductive layer is not less than 4% and not more than 25% of the peripheral length of the road-contacting surface in the tire meridian cross section.

2. The pneumatic motorcycle tire according to claim 1, wherein the electronically conductive layer is angled relative to the tire radial direction at an angle of 10° or less.

3. The pneumatic motorcycle tire according to claim 1 or 2, wherein the road-contacting surface of the tread portion is sectioned into five areas consisting of a central area including the tire equatorial plane, a pair of shoulder areas (7b,17b,17e) each including a tread end, and a pair of intermediate areas (7c) each located between the shoulder area and the central area, and the central area, the intermediate areas and the shoulder areas are each formed by different types of rubbers.

4. The pneumatic motorcycle tire according to any one of claims 1 to 3, wherein
the tread rubber is formed by a single-layered structure.

5. The pneumatic motorcycle tire according to any one of claims 1 to 3, wherein
at least one area of the tread rubber portion of the tread rubber is formed by a multi-layered structure.

## Patentansprüche

1. Motorradluftreifen mit einer geschichteten Struktur mit einer oder mehrer Schichten, umfassend:
einen Laufflächenabschnitt (1) umfassend ein Laufflächengummi (6) und welcher eine Straßenkontaktfläche (7, 17) bildet;
ein Paar Seitenwandabschnitte (2), welche sich jeweils radial nach innen von einem entsprechenden Seitenabschnitt des Laufflächenabschnitts erstrecken; und
Wulstabschnitte (3), welche sich radial nach innen von den entsprechenden Seitenwandabschnitten erstrecken, wobei
eine elektrisch leitfähige Schicht (8) aus Gummi mit einem spezifischen Widerstand von 1 x 10⁶ Ohm oder weniger in einem Mittenbereich (7a, 17a, 17d) der Straßenkontaktfläche in einer Position vorgesehen ist, welche von einer Reifenäquatorialebene (c) entfernt ist und sich zu beiden Seiten in der Reifenbreitenrichtung durch die gesamte Dicke des Laufflächengummis erstreckt,
wobei Laufflächengummiabschnitte anders als die elektrisch leitfähige Schicht einen spezifischen Widerstand von 1 x 10⁸ Ohm oder mehr aufweisen, und
wobei der Abstand zwischen der Reifenäquatorialebene und der elektrisch leitfähigen Schicht nicht weniger als 4% und nicht mehr als 25% der Umfangslänge der Straßenkontaktfläche in dem Reifenmeridianquerschnitt ist.

2. Motorradluftreifen nach Anspruch 1, wobei die elektronisch leitfähige Schicht relativ zur Reifenradialrichtung einen Winkel von 10° oder weniger umschließt.

3. Motorradluftreifen nach Anspruch 1 oder 2, wobei die Straßenkontaktfläche des Laufflächenabschnitts in fünf Bereiche aufgeteilt ist, welche aus einem Mittenbereich, umfassend die Reifenäquatorialebene, ein Paar Schulterbereiche (7b, 17b, 17c), welche jeweils ein Laufflächenende umfassen, und ein Paar Zwischenbereiche (7c) umfassen, wobei jeder Bereich zwischen dem Schulterbereich und dem Mittenbereich angeordnet ist, und der Mittenbereich, die Zwischenbereiche und die Schulterbereiche jeweils aus unterschiedlichen Gummitypen gebildet sind.

4. Motorradluftreifen nach einem der Ansprüche 1 bis 3, wobei das Laufflächengummi aus einer Einzelschichtstruktur gebildet ist.

5. Motorradluftreifen nach einem der Ansprüche 1 bis 3, wobei zumindest ein Bereich des Laufflächengummiabschnitts des Laufflächengummis aus einer mehrschichtigen Struktur besteht.

## Revendications

1. Bandage pneumatique pour motocycle comportant une structure à couches, avec une ou plusieurs couches, comprenant :
une partie de bande de roulement (1) incluant une gomme de bande de roulement (6) et formant une surface en contact avec une route (7, 17) ;
une paire de parties de flanc (2) s'étendant chacune radialement vers l'intérieur à partir d'une partie latérale respective de la partie de bande de roulement ; et
des parties de talon (3) s'étendant radialement vers l'intérieur à partir des parties de flanc respectives ; dans lequel :
une couche conductrice d'électricité (8) composée de caoutchouc présentant une résistivité de 1 x 10⁶ Ω ou moins est agencée dans une région centrale (7a, 17a, 17d) de la surface en contact avec la route, au niveau d'une position espacée d'un plan équatorial du bandage pneumatique (c), vers les deux côtés dans une direction de la largeur du bandage pneumatique, à travers l'épaisseur de la gomme de bande de roulement ;
des parties de la gomme de bande de roulement, autres que la couche conductrice d'électricité, présentent une résistivité de 1 x 10⁸ Ω ou plus ; et
dans lequel la distance entre le plan équatorial du bandage pneumatique et la couche conductrice d'électricité ne représente pas moins de 4% et pas plus de 25% de la longueur périphérique de la surface en contact avec la route, dans la section transversale méridienne du bandage pneumatique.

2. Bandage pneumatique pour motocycle selon la revendication 1, dans lequel la couche conductrice d'électricité est inclinée par rapport à la direction radiale du bandage pneumatique, à un angle de 10° ou moins.

3. Bandage pneumatique pour motocycle selon les revendications 1 ou 2, dans lequel la surface en contact avec la route de la partie de bande de roulement est sectionnée en cinq régions consistant en une région centrale incluant le plan équatorial du bandage pneumatique, une paire de régions d'épaulement (7b, 17b, 17e), incluant chacune une extrémité de la bande de roulement, et une paire de régions intermédiaires (7c), agencées chacune entre la région d'épaulement et la région centrale, la région centrale, les régions intermédiaires et les régions d'épaulement étant chacune formées par différents types de caoutchouc.

4. Bandage pneumatique pour motocycle selon l'une quelconque des revendications 1 à 3, dans lequel :
la gomme de bande de roulement est formée par une structure à une seule couche.

5. Bandage pneumatique pour motocycle selon l'une quelconque des revendications 1 à 3, dans lequel :
au moins une région de la partie de gomme de bande de roulement de la gomme de bande de roulement est formée par une structure à couches multiples.
